# EUROPEAN PATENT APPLICATION

(11) **EP 4 704 490 A1**
(43) Date of publication of application: **04.03.2026**
(21) Application number: 25199228.5
(22) Date of filing: 29.08.2025
(51) Int. Cl.: H05B 1/02, B60H 1/00, H05B 3/84

(54) **SYSTEM AND METHOD FOR A THERMAL LAYER IN A VEHICLE**

(30) Priority: 30.08.2024 US 202463689193 P
(71) Applicant: Betterfrost Technologies Inc., West Oakville, ON L6L 5W2 (CA)
(72) Inventor: Saad, Sameh M. I., Oakville, L6L 5W2 (CA); Sheir, Ahmed, Oakville, L6L 5W2 (CA); Redding, Derrick, Oakville, L6L 5W2 (CA)
(74) Representative: Humphrey-Evans, Edward John

(57) **Abstract**

There are provided systems, methods and devices for a thermal layer or substrate in a vehicle. A system includes a conductive layer configured to be applied inside a surface of a component of the vehicle. The system further includes a pulse electro-thermal de-icing (PETD) controller configured to provide electro-thermal pulses to the conductive layer to vary a temperature of the surface. A method includes applying a conductive layer inside a surface of a component of the vehicle. The method further includes providing electro-thermal pulses to the conductive layer to vary a temperature of the surface.

## Description

### Technical Field

The embodiments disclosed herein relate to heat management, and, in particular to a thermal layer or substrate in a vehicle.

### Introduction

Operating a vehicle in a cold climate can have the undesirable effect of significantly reducing the range of travel. The reduction is due to a change in battery capacity (due to battery chemistry), as well as additional energy usage requirements from the heating, ventilation, and air conditioning (HVAC) of the vehicle to keep the cabin warm for the driver and passengers.

Thus, the thermal load for the cabin is higher in cold climates due to the high losses of heat from glass components (e.g., the windshield, side glass windows, and rear glass). Such losses are especially high from the front windshield at higher vehicle speeds. Moreover, ice buildup on windshields or windscreens and other windows can pose several problems, including the creation of hazardous conditions due to poor visibility. In these conditions, the HVAC has to work harder to accommodate for such losses.

One technique to reduce such heat losses is to provide vehicles with more insulation. However, more insulation may be problematic when the same vehicle is used in warmer seasons as cooling and ventilation may be hindered. Similarly, as the greatest losses of heat occur at areas of glass in the vehicle, it can be exceedingly difficult to insulate glass areas without sacrificing the visibility they provide.

### Object to the Invention

Accordingly, there is a need for techniques to reduce heat loss in a vehicle in a cold climate that are not subject to one or more limitations of the prior art. The present invention seeks to overcome or ameliorate at least some of the disadvantages described above. The present invention seeks to provide a system that can provide an active thermal management method and system to a vehicle.

This background information is provided to reveal information believed by the applicant to be of possible relevance to the present disclosure. No admission is necessarily intended, nor should be construed, that any of the preceding information constitutes prior art against the present disclosure

### Summary

A thermal system for a vehicle is provided. The system includes a conductive layer configured to be applied to a surface of a component of the vehicle. The system further includes a pulse electro-thermal de-icing (PETD) controller configured to provide electro-thermal pulses to the conductive layer to vary a temperature of the surface.

In an embodiment, the conductive layer is transparent.

In an embodiment, the PETD controller provides electro-thermal pulses to a plurality of surfaces in the vehicle.

In an embodiment, the PETD controller provides electro-thermal pulses to a set of the plurality of surfaces in the vehicle.

In an embodiment, the PETD controller is powered by the vehicle.

In an embodiment, the PETD controller is powered by a portable power supply.

In an embodiment, the surface includes at least one of glass, polycarbonate (PC), polymer, and metal. Each of such surfaces may comprise a multilayered component. The conductive layer may be an intermediate layer, between first and second outer layers. The conductive layer may be applied prior to a second lamination process.

In an embodiment, the component includes at least one of a windshield, a side glass, a back glass, a roof, and a battery container.

In an embodiment, the PETD controller provides electro-thermal pulses to surfaces of a plurality of components in the vehicle.

In an embodiment, the PETD controller utilizes sensors for feedback to operate sensor-less.

In an embodiment, the PETD controller optimizes a peak and an average power supplied to the surface based on at least one of a size of the surface, and a location of the surface.

In an embodiment, the PETD controller optimizes energy delivered to the surface based on at least one of a size of the surface, and a location of the surface.

In an embodiment, the PETD controller determines an order of heating the surface relative to another surface to maximize power utilization and improve energy efficiency.

In an embodiment, thermal resistance between the conductive layer and an outside environment is greater than thermal resistance between the conductive layer and an inside environment.

In an embodiment, thermal resistance between the conductive layer and the outside environment is increased by at least one of increasing a thickness of a polymer layer in the surface, increasing a thickness of an outside glass layer of the surface, using a glass layer and/or polymer layer with a high thermal resistivity in the surface, and adding an additional layer of material to the surface.

A method for a thermal layer in a vehicle is provided. The method includes applying a conductive layer inside a surface of a component of the vehicle. The method further includes providing controller operable to provide electro-thermal pulses to the conductive layer to vary a temperature of the surface.

In an embodiment, the conductive layer is transparent.

In an embodiment, the PETD controller provides electro-thermal pulses to a plurality of surfaces in the vehicle.

In an embodiment, the PETD controller provides electro-thermal pulses to a set of the plurality of surfaces in the vehicle.

In an embodiment, the PETD controller is powered by the vehicle.

In an embodiment, the PETD controller is powered by a portable power supply.

In an embodiment, the surface includes at least one of glass, polycarbonate (PC), polymer, and metal.

In an embodiment, the component includes at least one of a windshield, a side glass, a back glass, a roof, and a battery container.

In an embodiment, the PETD controller provides electro-thermal pulses to surfaces of a plurality of components in the vehicle.

In an embodiment, the PETD controller utilizes sensors for feedback to operate sensor-less.

In an embodiment, the PETD controller optimizes a peak and an average power supplied to the surface based on at least one of a size of the surface, and a location of the surface.

In an embodiment, the PETD controller optimizes energy delivered to the surface based on at least one of a size of the surface, and a location of the surface.

In an embodiment, the PETD controller determines an order of heating the surface relative to another surface to maximize power utilization and improve energy efficiency.

In an embodiment, thermal resistance between the conductive layer and an outside environment is greater than thermal resistance between the conductive layer and an inside environment.

In an embodiment, thermal resistance between the conductive layer and the outside environment is increased by at least one of increasing a thickness of a polymer layer in the surface, increasing a thickness of an outside glass layer of the surface, using a glass layer and/or polymer layer with a higher thermal resistivity in the surface, and adding an additional layer of material to the surface.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 depicts a block diagram of an example system for a thermal layer in a vehicle, according to an embodiment of the present disclosure.
Figure 2 depicts an example method flow for the thermal layer system of Figure 1, according to an embodiment of the present disclosure.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

As used herein, the term "about" should be read as including variation from the nominal value, for example, a +/-10% variation from the nominal value. It is to be understood that such a variation is always included in a given value provided herein, whether or not it is specifically referred to.

A description of an embodiment with several components in communication with each other does not imply that all such components are required. On the contrary, a variety of optional components are described to illustrate the wide variety of possible embodiments of the present disclosure.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to heat management, and more particularly to thermal barrier in a vehicle.

In a vehicle being operated in a cold climate, most of the thermal losses are from the glass areas of the vehicle. These losses are especially high from the front windshield, and when the vehicle travels at higher speeds. In these conditions, other systems in the vehicle (such as the HVAC system) must consume more energy to combat these heat losses.

As a solution, the heat losses through the glass may be reduced, compensated for or even eliminated by maintaining the glass temperature at a value close to the required cabin temperature (or within an acceptable range to it) and can be considered to be, in effect, a thermal barrier.

Systems and methods disclosed herein provide for using the existing transparent conductive layer inside surfaces of components (or adding one if it does not exist) and employing pulse electro-thermal de-icing (PETD) technology to heat the surface to the required temperature level using very fast and energy efficient pulses.

Without limitation, examples of components may include a windshield, a side glass, a back/rear glass, a roof, and a battery container.

Advantageously, the techniques disclosed herein may be used in a variety of vehicles that operate in cold climates. For example, the systems and method disclosed herein may be used in vehicles that operate on land. Similarly, the techniques disclosed herein may be used in aircraft and other vehicles capable of flight.

Another advantage of PETD techniques is realized in that it has been found that it maintains a temperature at the surface, and heat loss to the environment can be reduced.

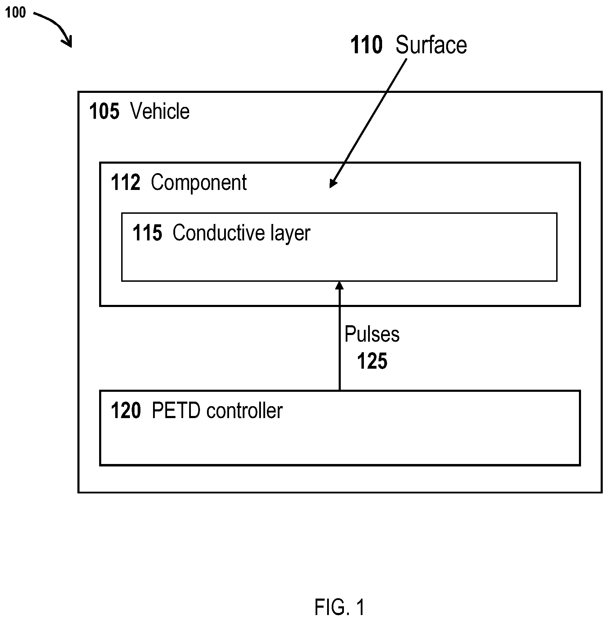

Referring to Figure 1, depicted therein is an example system 100 for a thermal layer or substrate in a vehicle 105.

The system 100 includes a conductive layer 115 configured to be applied inside a surface 110 of a component 112 of the vehicle 105.

The system 100 further includes a pulse electro-thermal de-icing (PETD) controller 120 configured to provide electro-thermal pulses 125 to the conductive layer 115 to vary a temperature of the surface 110.

For clarity of illustration, only a single surface 110, a single component 112, and a single conductive layer 115 are depicted, but it will be appreciated that the PETD controller 120 may be in communication with any number of surfaces 110, components 112, and conductive layers 115, e.g., a plurality of surfaces 110, components 112, and conductive layers 115.

Similarly, there may be more than one PETD controller 120 present in a vehicle 105. For example, each PETD controller 120 may be dedicated for use with a single conductive layer 115 or a set of conductive layers 115. In another example, there may be redundancy present such that more than one PETD controllers 120 are in communication with the same conductive layer 115. This may allow, for example, each conductive layer 115 to be controlled individually, or allow for the operator to control all conductive layers 115 in the vehicle 105 simultaneously.

In an embodiment, the conductive layer 115 is transparent.

In some examples, the conductive layer 115 may be tinted or otherwise configured to block sunlight or visibility from outside of the vehicle 105, while allowing those inside the vehicle to see outside clearly.

In an embodiment, the PETD controller 120 is able to provide electro-thermal pulses 125 to a plurality of surfaces 110 in the vehicle 105.

The same PETD controller 120 may be used to power all conductive layers 125 within surfaces 110.

In an embodiment, the PETD controller 120 is able to provide electro-thermal pulses 125 to a set of the plurality of surfaces in the vehicle 105.

Further, the PETD controller 120 may be used to switch power between all conductive layers 115 within surfaces 110 to achieve the most energy efficient surface heating and reduce the heating load required from an HVAC of the vehicle 105.

In an embodiment, the PETD controller 120 is powered by the vehicle 105.

In an embodiment, the PETD controller 120 is powered by a portable power supply.

A portable power supply may include a battery consisting of any suitable chemistry and composition (either electrochemical or electromechanical) but is not limited to any specific technology and may accommodate other types of batteries as well. Those of skill in the art will appreciate that portable power supply systems may also vary depending on a battery type.

The PETD controller 120 may be powered using any power source. If used in an automotive application, then the PETD controller 120 may be operated using a low voltage or a high voltage source. Thus, the PETD controller 120 may be operated using low power (less efficiency) or high power (maximum efficiency).

In an embodiment, the surface 110 includes at least one of glass, polycarbonate (PC), polymer, and metal. The conductive layer may be an intermediate layer, between first and second outer layers. The conductive layer may be applied prior to a second lamination process.

In various embodiments, the surface 110 may include various suitable known polymers, such as, for example, polyvinyl butyral (PVB).

In an embodiment, the component 112 includes at least one of a windshield, a side glass, a back glass, a roof, and a battery container.

In an embodiment, the PETD controller 120 is able to provide electro-thermal pulses to surfaces 110 of a plurality of components 112 in the vehicle 105.

In an embodiment, the PETD controller 120 utilizes sensors for feedback to operate sensor-less.

In an embodiment, the PETD controller 120 optimizes a peak and an average power supplied to the surface 110 based on at least one of a size of the surface 110, and a location of the surface 110.

In an embodiment, the PETD controller 120 optimizes energy delivered to the surface 110 based on at least one of a size of the surface 110, and a location of the surface 110.

In an embodiment, the PETD controller 120 determines an order of heating the surface 110 relative to another surface to maximize power utilization and improve energy efficiency.

In some embodiments, thermal resistance between the conductive layer 115 and an outside environment is greater than thermal resistance between the conductive layer 115 and an inside environment.

A thermal barrier may operate at a high efficiency where the thermal resistance between the heat source (e.g., conductive layer 115) and the ambient (polymer and outer glass layer; or the outer glass layer only) is high.

Therefore, to further improve the efficiency and performance of the system 100, the component 112 (e.g., a heated windshield) may be designed such that the thermal resistance between the conductive layer 115 and the outside environment is much greater than the thermal resistance between the conductive layer 115 and the inside environment (e.g., the vehicle cabin).

In some embodiments, thermal resistance between the conductive layer 115 and the outside environment is increased by at least one of: increasing a thickness of a polymer layer in the surface 110; increasing a thickness of an outside glass layer of the surface 110; using a glass layer and/or polymer layer with a higher thermal resistivity in the surface 110; and adding a new layer of material to the surface 110.

In various embodiments, any suitable material may be used for adding to the surface 110 (e.g., polymer, glass, etc.).

Benefits of the present disclosure include allowing for greater visibility in climates where windshields and windows are prone to ice buildup. Existing technologies, vehicles and vessels may be able to easily incorporate the thermal barrier techniques disclosed herein.

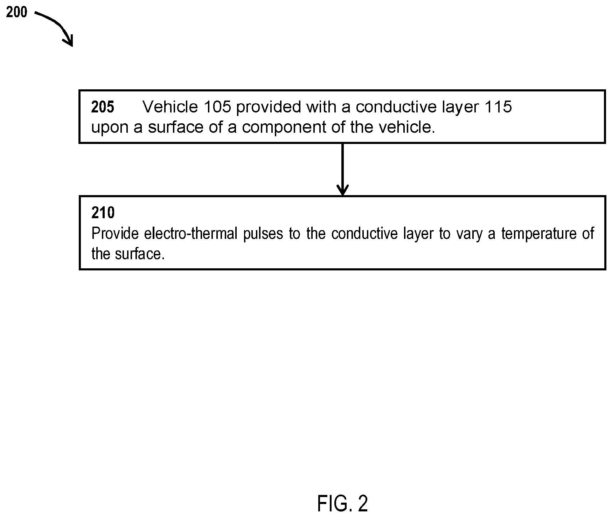

Referring now to Figure 2, depicted therein is a method 200 for a thermal layer or substrate in a vehicle.

At 205, the method 200 involves a vehicle 105 in accordance with the invention having a conductive layer 115 upon a surface of a component of the vehicle.

At 210, the method 200 further includes providing electro-thermal pulses to the conductive layer 115 to vary a temperature of the surface.

It will be appreciated that the PETD controller may be in communication with any number of glass components 110 and conductive layers.

Further, there may be more than one PETD controller present in a vehicle. For example, each PETD controller may be dedicated for use with a single conductive layer or a set of conductive layers. In another example, there may be redundancy present such that more than one PETD controllers are in communication with the same conductive layer. This may allow, for example, each conductive layer to be controlled individually, or allow for the operator to control all conductive layers in the vehicle simultaneously.

In an embodiment, the conductive layer is transparent.

In some cases, the conductive layer may be tinted or otherwise configured to block sunlight or visibility from outside of the vehicle, while allowing those inside the vehicle to see outside clearly.

In an embodiment, the PETD controller is able to provide electro-thermal pulses to a plurality of surfaces in the vehicle.

In an embodiment, the PETD controller is able to provide electro-thermal pulses to a set of the plurality of surfaces in the vehicle.

In an example, the PETD controller may be used to switch power between all conductive layers within glass components to achieve the most energy efficient surface heating and reduce the heating load required from an HVAC of the vehicle.

In an embodiment, the PETD controller is powered by the vehicle.

In an embodiment, the PETD controller is powered by a portable power supply.

A portable power supply may include a battery consisting of any suitable chemistry and composition (either electrochemical or electromechanical) but is not limited to any specific technology and may accommodate other types of batteries as well. Those of skill in the art will appreciate that portable power supply systems may also vary depending on a battery type.

The PETD controller may be powered using any power source. If used in an automotive application, then the PETD controller may be operated using a low voltage or a high voltage source. Thus, the PETD controller may be operated using low power (less efficiency) or high power (maximum efficiency).

In an embodiment, the surface includes at least one of glass, polycarbonate (PC), polymer, and metal.

In various embodiments, the surface may include various suitable known polymers, such as, for example, polyvinyl butyral (PVB).

In an embodiment, the component includes at least one of a windshield, a side glass, a back glass, a roof, and a battery container.

In an embodiment, the PETD controller is able to provide electro-thermal pulses to surfaces of a plurality of components in the vehicle.

In an embodiment, the PETD controller utilizes sensors for feedback to operate sensor-less.

In an embodiment, the PETD controller optimizes a peak and an average power supplied to the surface based on at least one of a size of the surface, and a location of the surface.

In an embodiment, the PETD controller optimizes energy delivered to the surface based on at least one of a size of the surface, and a location of the surface.

In an embodiment, the PETD controller determines an order of heating the surface relative to another surface to maximize power utilization and improve energy efficiency.

In some embodiments, thermal resistance between the conductive layer and an outside environment is greater than thermal resistance between the conductive layer and an inside environment.

A thermal layer may operate at a high efficiency where the thermal resistance between the heat source (e.g., conductive layer) and the ambient (polymer and outer glass layer; or the outer glass layer only) is high.

Therefore, to further improve the efficiency and performance of the method 200, the component (e.g., a heated windshield) may be designed such that the thermal resistance between the conductive layer and the outside environment is much greater than the thermal resistance between the conductive layer and the inside environment (e.g., the vehicle cabin).

In some embodiments, thermal resistance between the conductive layer and the outside environment is increased by at least one of: increasing a thickness of a polymer layer in the surface; increasing a thickness of an outside glass layer of the surface; using a glass layer and/or polymer layer with a higher thermal resistivity in the surface; and adding an additional layer of material to the surface.

In various embodiments, any suitable material may be used for adding to the surface (e.g., polymer, glass, etc.).

While the above description provides examples of one or more apparatus, methods, or systems, it will be appreciated that other apparatus, methods, or systems may be within the scope of the claims as interpreted by one of skill in the art. Elements of each embodiment may be incorporated into other embodiments, for example, configurations or components discussed in relation to one embodiment, may be applied to other embodiments disclosed herein. Further, it is evident that various modifications and combinations can be made without departing from the invention. The specification and drawings are, accordingly, to be regarded simply as an illustration of the invention as defined by the claims, and are contemplated to cover any and all modifications, variations, combinations or equivalents that fall within the scope of the present invention.

## Claims

1. A thermal system (100) for a vehicle (105), the system comprising:
a conductive layer (115) configured to be applied inside a surface (110) of a component of the vehicle; and
a pulse electro-thermal de-icing (PETD) controller (120) configured to provide electro-thermal pulses (125) to the conductive layer to vary a temperature of the surface.

2. The system of claim 1, wherein the PETD (120) controller provides electro-thermal pulses to a plurality of surfaces in the vehicle, wherein the PETD controller provides electro-thermal pulses to a set of the plurality of surfaces in the vehicle; or wherein the PETD controller is able to provide electro-thermal pulses to surfaces of a plurality of components in the vehicle.

3. The system of claim 1 or 2, wherein the surface (110) includes at least one of:
glass; polycarbonate (PC); polymer; and metal.

4. The system according to any one of claim 1 - 3, wherein the PETD controller (120) utilizes sensors for feedback to operate sensor-less.

5. The system according to any one of claims 1 - 4, wherein the PETD controller (120) optimizes a peak and an average power supplied to the surface based on at least one of: a size of the surface; and a location of the surface; or
wherein the PETD controller optimizes energy delivered to the surface based on at least one of: a size of the surface; and a location of the surface.

6. The system according to any one of claims 1 - 5, wherein the PETD controller (120) determines an order of heating the surface relative to another surface to maximize power utilization and improve energy efficiency.

7. The system according to any one of claims 1 - 6, wherein thermal resistance between the conductive layer and an outside environment is greater than thermal resistance between the conductive layer and an inside environment.

8. The system of claim 7, wherein thermal resistance between the conductive layer and the outside environment is increased by at least one of: increasing a thickness of a polymer layer in the surface; increasing a thickness of an outside glass layer of the surface; using a glass layer and/or polymer layer with a high thermal resistivity in the surface; and adding an additional new layer of material to the surface.

9. A method for operating a thermal layer in a vehicle (105), the vehicle comprising: a conductive layer (115) configured to be applied inside a surface (110) of a component of the vehicle; and a pulse electro-thermal de-icing (PETD) controller (120) configured to provide electro-thermal pulses (125) to the conductive layer the method comprising:
providing electro-thermal pulses (210) to the conductive layer to vary a temperature of the surface.

10. The method of claim 9, wherein the PETD controller provides electro-thermal pulses (125) to a plurality of surfaces (110) in the vehicle (105), wherein the PETD controller (120) provides electro-thermal pulses to a set of the plurality of surfaces in the vehicle; or
wherein the PETD controller is able to provide electro-thermal pulses to surfaces of a plurality of components in the vehicle.

11. The method of claim 9 or 10, wherein the PETD controller (125) utilizes sensors for feedback to operate sensor-less.

12. The method according to any one of claims 9 - 11, wherein the PETD controller (125) optimizes a peak and an average power supplied to the surface based on at least one of: a size of the surface; and a location of the surface; or
wherein the PETD controller optimizes energy delivered to the surface based on at least one of: a size of the surface; and a location of the surface.

13. The method according to any one of claim 9 - 12, wherein the PETD controller (125) determines an order of heating the surface relative to another surface to maximize power utilization and improve energy efficiency.

14. The method according to any one of claims 9 - 13, wherein thermal resistance between the conductive layer and an outside environment is greater than thermal resistance between the conductive layer and an inside environment.

15. The method of claim 14, wherein thermal resistance between the conductive layer and the outside environment is increased by at least one of: increasing a thickness of a polymer layer in the surface; increasing a thickness of an outside glass layer of the surface; using a glass layer and/or polymer layer with a higher thermal resistivity in the surface; and adding an additional layer of material to the surface.
